(19) Europäisches Patentamt / European Patent Office / Office européen des brevets

(11) **EP 4 436 169 A1**

(12) **EUROPEAN PATENT APPLICATION**
published in accordance with Art. 153(4) EPC

(43) Date of publication:
**25.09.2024 Bulletin 2024/39**

(21) Application number: **22919045.9**

(22) Date of filing: **14.12.2022**

(51) International Patent Classification (IPC):
*H04N 19/11* (2014.01)    *H04N 19/513* (2014.01)
*H04N 19/186* (2014.01)    *H04N 19/105* (2014.01)
*H04N 19/176* (2014.01)    *H04N 19/70* (2014.01)

(52) Cooperative Patent Classification (CPC):
H04N 19/105; H04N 19/11; H04N 19/176;
H04N 19/186; H04N 19/513; H04N 19/70

(86) International application number:
**PCT/KR2022/020377**

(87) International publication number:
**WO 2023/132508 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2022 KR 20220000957**
**13.12.2022 KR 20220173907**

(71) Applicants:
• **Hyundai Motor Company**
**Seoul 06797 (KR)**

• **Kia Corporation**
**Seocho-gu**
**Seoul 06797 (KR)**

(72) Inventors:
• **HEO, Jin**
**Yongin-si Gyeonggi-do 16836 (KR)**
• **PARK, Seung Wook**
**Yongin-si Gyeonggi-do 16803 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD FOR TEMPLATE-BASED INTRA MODE DERIVATION FOR CHROMA COMPONENTS**

(57)    A method and an apparatus are disclosed for template-based intra mode derivation for chroma components. A video coding method and an apparatus extend a conventional template-based intra mode derivation (TIMD) method for luma component to intra prediction of chroma components. The video coding method and apparatus use a TIMD method with a reduced complexity.

FIG. 8

**Description**

[Technical Field]

The present disclosure relates to a method for template-based intra mode derivation for chroma components.

[Background]

The statements in this section merely provide background information related to the present disclosure and do not necessarily constitute prior art.

Since video data has a large amount of data compared to audio or still image data, the video data requires a lot of hardware resources, including a memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/AVC, High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

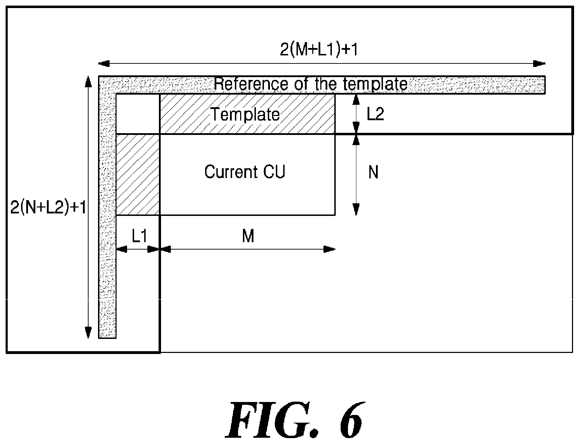

The template-based intra mode derivation (TIMD) method is a technique for deriving the optimal intra-prediction mode for the current block based on a template. Applying the TIMD method to all candidate modes in the most probable mode (MPM) list and comparing all candidate modes may derive the optimal intra mode for the current block, which is a coding unit block also referred to as CU. The mode derived by using the TIMD technique may be used as a single additional mode for the current block. The current block's neighboring templates, $L1 \times N$ and $M \times L2$, used by the TIMD method, and the reference of the template used to generate the prediction template are illustrated in FIG. 6.

For each candidate mode in the MPM list, the TIMD method generates a prediction template by applying the directionality of the relevant mode to the reference pixels of the template and then calculates the sum of absolute transformed differences (SATD) between the pixels of the generated prediction template and the pixels of the already reconstructed template. The mode with the smallest SATD among all candidate modes in the MPM list is the current block's intra mode selected according to the TIMD method.

The aforementioned TIMD method used for encoding the luma component can be extended to encoding the chroma component. Similar to the TIMD method for luma component, the TIMD method for chroma components derives the intra mode by using a template composed of the neighboring samples of the current block of chroma components or the current chroma block. The TIMD method for chroma components may use a coding unit (CU) level flag indicating whether the current chroma block has used the TIMD method.

Meanwhile, the TIMD method for chroma components has the issue of just modest coding efficiency with its relative complexity being high, especially for the decoder. Therefore, there is a need to provide a TIMD method for chroma components to improve the video coding efficiency and reduce the complexity.

[Disclosure]

[Technical Problem]

The present disclosure seeks to provide a video coding method and an apparatus that extend a conventional template-based intra mode derivation (TIMD) method for luma component to intra prediction of chroma components. The video coding method and apparatus use a TIMD method with a reduced complexity to improve video coding efficiency and enhance video quality.

[Technical Solution]

At least one aspect of the present disclosure provides a method performed by a video decoding device for deriving an intra mode of a current chroma block. The method includes generating a candidate mode list that is a list of candidate modes of chroma components for the current chroma block. The method also includes determining use or nonuse of a template-based intra mode derivation method for the current chroma block. In response to the use of the template-based intra mode derivation method, the method further includes determining use or nonuse of a cross-component linear model (CCLM). In response to the use of the CCLM, the method further includes determining an intra mode of the current chroma block by applying the template-based intra mode derivation method to CCLM modes in the candidate mode list. In response to the nonuse of the CCLM, the method further includes determining an intra mode of the current chroma block by applying the template-based intra mode derivation method to directional modes in the candidate mode list.

Another aspect of the present disclosure provides a method performed by a video encoding device for deriving an intra mode of a current chroma block. The method includes generating a candidate mode list that is a list of candidate modes of chroma components for the current chroma block. The method also includes determining a first mode that is optimal by performing an intra prediction on the current chroma block. The method also includes determining a second mode that is optimal by performing a template-based intra mode derivation method on the candidate modes in the candidate mode list. The method also includes verifying whether the first mode is optimal with respect to the second mode. In response to a verification that the second mode is optimal, the method further includes: determining the second mode to be an intra mode of the current chroma block; setting a flag indicating whether to use the template-based intra mode derivation method to true; and setting a flag indicating whether to use a cross-component linear model (CCLM) depending on whether the second mode is included in CCLM modes.

Yet another aspect of the present disclosure provides a computer-readable recording medium storing a bitstream generated by a video encoding method. The video encoding method includes generating a candidate mode list that is a list of candidate modes of chroma components for a current chroma block. The video encoding method also includes determining a first mode that is optimal by performing an intra prediction on the current chroma block. The video encoding method also includes determining a second mode that is optimal by performing a template-based intra mode derivation method on the candidate modes in the candidate mode list. The video encoding method also includes verifying whether the first mode is optimal with respect to the second mode. In response to a verification that the second mode is optimal, the video encoding method further includes: determining the second mode to be an intra mode of the current chroma block; setting a flag indicating whether to use the template-based intra mode derivation method to true; and setting a flag indicating whether to use a cross-component linear model (CCLM) depending on whether the second mode is included in CCLM modes.

[Advantageous Effects]

As described above, the present disclosure provides a video coding method and an apparatus that extend a conventional template-based intra mode derivation (TIMD) method for luma component to intra prediction of chroma components. The video coding method and apparatus use a TIMD method with a reduced complexity. Thus, the video coding method and the apparatus improve video coding efficiency and enhance video quality.

[Brief Description of the Drawings]

FIG. 1 is a block diagram of a video encoding apparatus that may implement the techniques of the present disclosure.
FIG. 2 illustrates a method for partitioning a block using a quadtree plus binarytree ternarytree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIG. 6 is a diagram illustrating the current block's neighboring templates used by the template-based intra mode derivation (TIMD) method and illustrating the reference of the template used to generate the prediction template.
FIG. 7 is a flowchart of a TIMD method performed by a video encoding device for chroma components, according to at least one embodiment of the present disclosure.
FIG. 8 is a flowchart of a TIMD method performed by a video decoding device for chroma components, according to at least one embodiment of the present disclosure.
FIG. 9 is a diagram illustrating a current chroma block and its neighboring blocks.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

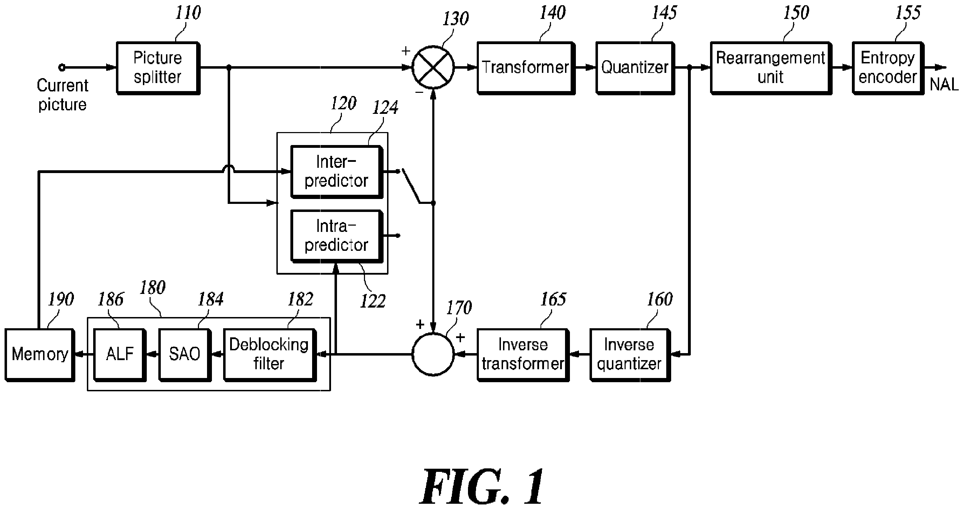

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternary tree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternary tree (QTBTTT) structure may be used. Here, a binarytree ternary tree (BTTT) is added to the tree structures to be referred to as a multiple-type tree (MTT).

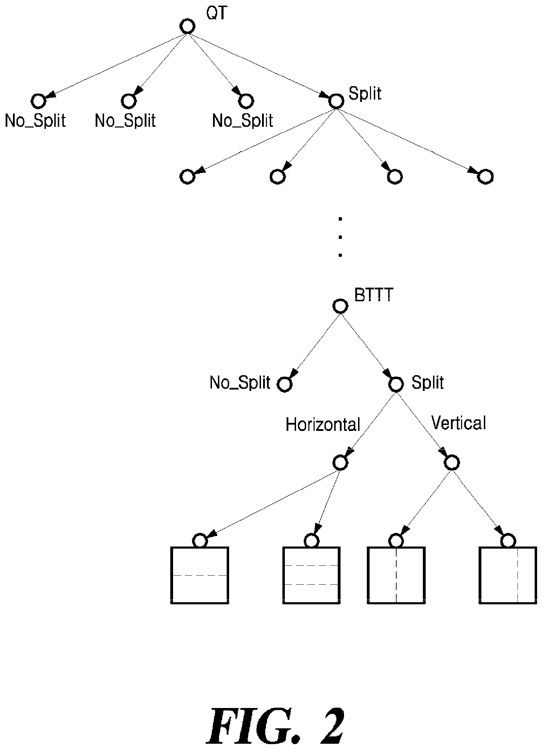

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

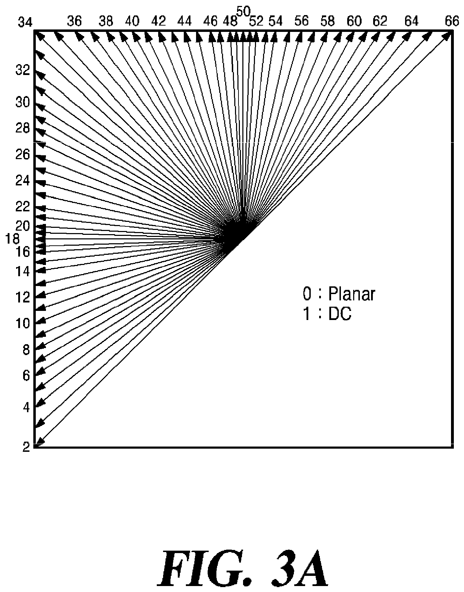

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 non-directional modes including a Planar mode and a DC mode and may include 65 directional modes. A neighboring pixel and an arithmetic equation to be used are defined differently according to each prediction mode.

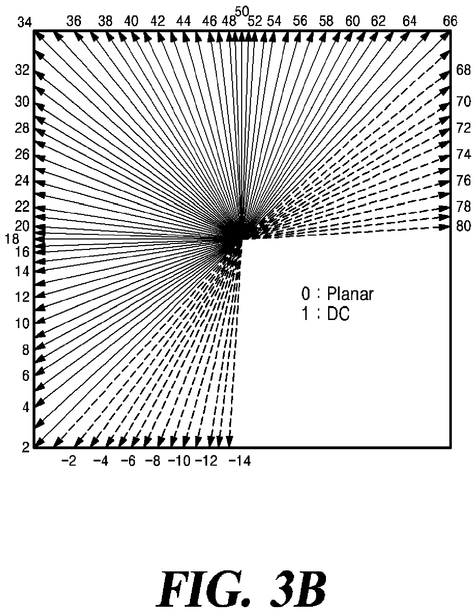

For efficient directional prediction for the current block having a rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current block in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

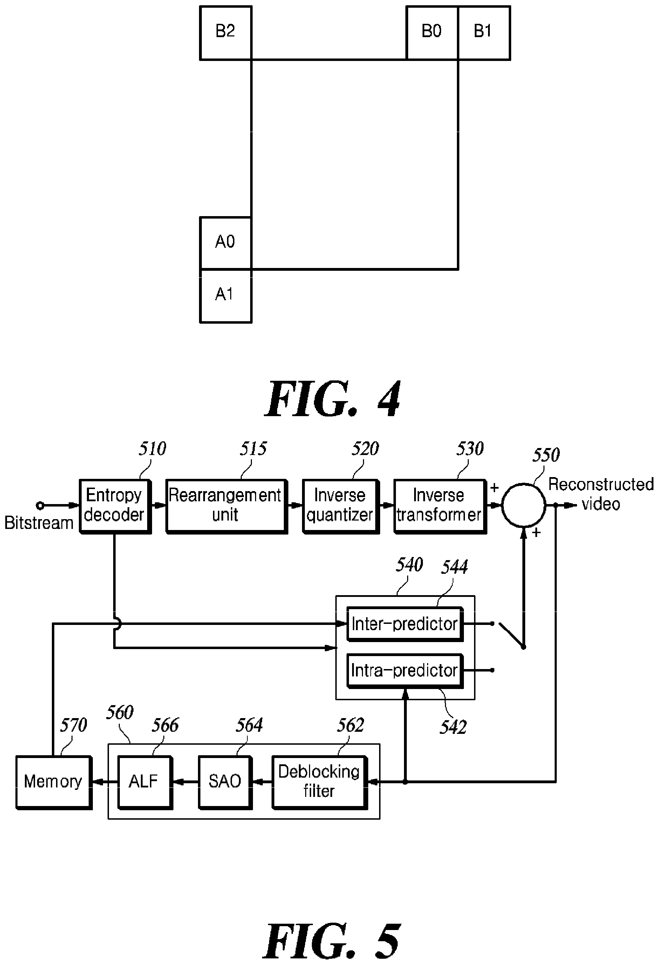

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

The present disclosure in some embodiments relates to encoding and decoding video images as described above. More specifically, the present disclosure provides a video coding method and an apparatus that extend a conventional template-based intra mode derivation (TIMD) method for luma component to intra prediction of chroma components. The video coding method and apparatus use a TIMD method with a reduced complexity.

The following embodiments may be performed by the intra predictor 122 in the video encoding device. The following embodiments may also be performed by intra predictor 542 in the video decoding device.

The video encoding device when encoding the current block may generate signaling information associated with the present embodiments in terms of optimizing rate distortion. The video encoding device may use the entropy encoder 155 to encode the signaling information and may transmit the encoded signaling information to the video decoding device. The video decoding device may use the entropy decoder 510 to decode, from the bitstream, the signaling information associated with decoding the current block.

In the following description, the term "target block" may be used interchangeably with the current block or coding unit (CU). The term "target block" may refer to some region of the coding unit.

Further, the value of one flag being true indicates when the flag is set to 1. Additionally, the value of one flag being false indicates when the flag is set to 0.

**I. Intra Prediction of Chroma Components**

Several techniques are introduced to improve coding efficiency by using intra prediction.

In the VVC (Versatile Video Coding) technique, the intra-prediction modes of the luma block include 65 subdivided directional modes (i.e., 2 to 66) in addition to the non-directional modes (i.e., planar and direct current or DC), as illustrated in FIG. 3A. The 65 directional modes, planar, and DC are collectively referred to as 67 intra-prediction modes or IPMs.

Depending on the prediction direction utilized by the luma block, the chroma block may also have limited access to intra prediction of these subdivided directional modes. However, the intra prediction of the chroma block may not always utilize the various directional modes available to the luma block in addition to the horizontal and vertical directions. To be able to use these different directional modes, the prediction mode of the current chroma block needs to be set to direct mode (DM). By this mode setting into DM, the current chroma block may use directional modes other than the horizontal and vertical of the luma block.

When a chroma block is encoded, the most frequently used or commonly used intra-prediction modes for video quality preservation include planar, DC, vertical, horizontal, and DM. In DM, the intra-prediction mode of the luma block that spatially corresponds to the current chroma block is used as the intra-prediction mode for that chroma block.

The video encoding device may signal to the video decoding device whether the intra-prediction mode of the chroma block is DM. The video encoding device may communicate the DM to the video decoding device in many ways. For example, the video encoding device may set the intra chroma_pred mode, which is information for indicating the intra-prediction mode of the chroma block, to a specific value and may transmit intra chroma_pred mode to the video decoding device to indicate whether the intra-prediction mode of the chroma block is DM.

If the chroma block is encoded in intra-prediction mode, the video encoding device may set the intra-prediction mode of the chroma block, IntraPredModeC according to Table 1.

Hereinafter, to distinguish IntraPredModeC from intra chroma_pred mode, which is information related to the intra-prediction mode of the chroma block, IntraPredModeC and intra chroma_pred mode are denoted as chroma intra-prediction mode and chroma intra-prediction mode indicator, respectively.

[Table 1]

| cclm_mode_flag | cclm_mode_idx | intra_chroma_pred_mode | lumaIntraPredMode | | | | |
|---|---|---|---|---|---|---|---|
| | | | 0 | 50 | 18 | 1 | X ( 0<= X <=66 ) |
| 0 | - | 0 | 66 | 0 | 0 | 0 | 0 |
| 0 | - | 1 | 50 | 66 | 50 | 50 | 50 |
| 0 | - | 2 | 18 | 18 | 66 | 18 | 18 |
| 0 | - | 3 | 1 | 1 | 1 | 66 | 1 |
| 0 | - | 4 | 0 | 50 | 18 | 1 | X |
| 1 | 0 | - | 81 | 81 | 81 | 81 | 81 |
| 1 | 1 | - | 82 | 82 | 82 | 82 | 82 |
| 1 | 2 | - | 83 | 83 | 83 | 83 | 83 |

Here, lumaIntraPredMode is the intra-prediction mode of the luma block corresponding to the current chroma block (hereinafter "luma intra-prediction mode"). The lumaIntraPredMode represents one of the prediction modes illustrated in FIG. 3A. For example, in Table 1, lumaIntraPredMode = 0 refers to the planar prediction mode and lumaIntraPredMode = 1 refers to the DC prediction mode. Cases with lumaIntraPredMode of 18, 50, and 66 indicate directional modes, referred to as horizontal, vertical, and VDIA, respectively. Meanwhile, cases that intra chroma_pred mode = 0, 1, 2, and 3 refer to planar, vertical, horizontal, and DC prediction modes, respectively. The case that intra chroma_pred mode = 4 is the DM, and the value of IntraPredModeC, the chroma intra-prediction mode, is set to be the same as the value of lumaIntraPredMode.

Meanwhile, the process performed by the video decoding device for parsing the intra-prediction mode of the chroma block is shown in Table 2.

[Table 2]

| |
|---|
| if( CclmEnabled) |
| **cclm_mode_flag** |
| if( cclm_mode_flag ) |
| **cclm_mode_idx** |
| else |

(continued)

> **intra_chroma_pred_mode**

The video decoding device parses cclm_mode_flag, which indicates whether to use cross-component linear model (CCLM) mode. If cclm_mode_flag is 1 to enable CCLM mode, the video decoding device parses cclm_mode_idx, which indicates the CCLM mode. Depending on the value of cclm_mode_idx, the CCLM mode may be one of the three modes. On the other hand, if cclm_mode_flag is 0, which means that CCLM mode is not used, the video decoding device parses intra_chroma_pred_mode, which indicates an intra-prediction mode, as described above.

If CCLM mode is applied for intra prediction of the current chroma block, the video decoding device determines a region in the luma image, corresponding to the current chroma block. The region is called hereinafter as "corresponding luma region." For predicting a linear model, the left reference pixels and the top reference pixels of the corresponding luma region may be utilized as well as the left reference pixels and the top reference pixels of the target chroma block. Hereinafter, the left reference pixels and the top reference pixels are collectively referred to as reference pixels, neighboring pixels, or adjacent pixels. Additionally, the reference pixels in the chroma channel are denoted as chroma reference pixels, and the reference pixels in the luma channel are denoted as luma reference pixels.

In CCLM prediction, a prediction block that is a predictor of the target chroma block is generated by deriving a linear model between the reference pixels in the corresponding luma region and the reference pixels in the chroma block and then applying that linear model to the reconstructed pixels in the corresponding luma region. For example, used for deriving the linear model may be four pairs of pixels that are pixels on the peripheral pixel line of the current chroma block combined with pixels in the corresponding luma region. The video decoding device may derive $\alpha$, $\beta$ representing the linear model for the four pairs of pixels, as shown in Equation 1.

$$【\text{Equation 1}】$$

$$\alpha = \frac{Y_b - Y_a}{X_b - X_a}, \; \beta = Y_a - \alpha \cdot X_a$$

Here, for the corresponding luma pixels among the four pairs of pixels, $X_a$ and $X_b$ represent the average of the two minimum values and the average of the two maximum values, respectively. Additionally, for the chroma pixels, $Y_a$ and $Y_b$ represent the average of the two minimum values and the average of the two maximum values, respectively. Then, the video decoding device may use the linear model to generate a predictor predc(i,j) of the current chroma block from the pixel values $rec'_L(i,j)$ of the corresponding luma region, as shown in Equation 2.

$$【\text{Equation 2}】$$

$$pred_c(i,j) = \alpha \cdot rec'_L(i,j) + \beta$$

As described above, the CCLM mode is divided into three modes, CCLM_LT, CCLM_L, and CCLM_T, depending on the location of the neighboring pixels used in the derivation of the linear model. CCLM_LT mode uses two pixels in each direction among the neighboring pixels to the left and top of the current chroma block. CCLM_L mode uses four pixels among the neighboring pixels to the left of the current chroma block. Finally, CCLM_T mode uses four pixels among the neighboring pixels adjacent to the top of the current chroma block.

The Most Probable Mode (MPM) technique utilizes the intra-prediction mode of neighboring blocks when intra-predicting the current block. The video encoding device generates an MPM list to include intra-prediction modes derived from predefined locations spatially adjacent to the current block. When applying MPM mode, the video encoding device may send the video decoding device a flag, intra_luma_mpm_flag, indicating whether the MPM list is to be used. If intra_luma_mpm_flag is not present, it is inferred to be 1. Further, the video encoding device may transmit the MPM index, intra_luma_mpm_idx, in place of the index of the prediction mode and thus may improve the coding efficiency of the intra-prediction mode.

## II. **Embodiments According To the Present Disclosure**

The present embodiments extend the template-based intra mode derivation (TIMD) method for the luma component to work for intra prediction of the chroma components while reducing the complexity. Hereinafter, the embodiments are described with a focus on the video encoding device or the video decoding device for the sake of convenience. However, the following description may be applied similarly to both the video encoding device and the video decoding device.

When applying the TIMD method for existing chroma components, the video encoding device uses a method of generating a candidate mode list of the existing chroma components to determine the candidate mode list that is a list of candidate modes of chroma components and applies the TIMD method to each candidate mode in the determined list of candidate modes of chroma components to determine an optimal mode. Namely, the video encoding device operates on each candidate mode in the list of candidate modes of chroma components to apply a method of directional prediction of that candidate mode or intra prediction of that candidate mode to reference samples of the template to generate a prediction template. The video encoding device then calculates a sum of absolute transformed differences (SATD) between the samples of the generated prediction template and the samples of the already reconstructed template and determines the mode with the smallest SATD to be the intra-mode of the current chroma block selected according to the TIMD method for chroma components. Here, SATD is a method of calculating a sum of absolute differences (SAD) after transforming the samples to be compared into samples in the frequency domain.

Here, the chroma component refers to a Cb component or a Cr component. Hereinafter, the terms "candidate mode list of chroma components," "chroma candidate mode list," and "candidate mode list" may be used interchangeably.

When the video encoding device uses the TIMD method to determine the intra-mode of the current block of chroma components or the current chroma block, the video decoding device performs the same process as the video encoding device. Namely, the video decoding device composes a candidate mode list of chroma components and applies the TIMD method to all candidate modes in the generated candidate mode list of chroma components to determine the optimal mode. Therefore, the complexity of the video decoding device may increase.

<Example 1> TIMD Method for Chroma Components with Complexity Considered

Example 1 is for reducing the complexity of the video decoding device utilizing the TIMD method for chroma components by providing a syntax structure as shown in Table 3.

[Table 3]

| if( sps_chroma_timd_flag ) { |
| --- |
| **chroma_timd_flag** |
| if( chroma_timd_flag ) { |
| if( CclmEnabled ) |
| **cclm_flag** |
| } |
| else { |
| if( CclmEnabled ) |
| **cclm_mode_flag** |
| if( cclm_mode_flag ) |
| **cclm_mode_idx** |
| else |
| **intra_chroma_pred_mode** |
| } |
| } |
| else { |
| if( CclmEnabled) |
| **cclm_mode_flag** |
| if( cclm_mode_flag ) |
| **cclm_mode_idx** |

(continued)

| else |
|---|
| **intra_chroma_pred_mode** |
| } |

As shown in Table 3, in this example, the sps_chroma_timd_flag, a syntax indicating the use or nonuse of the TIMD method for chroma components is specified to be transmitted/parsed at the Sequence Parameter Set (SPS) level but is not necessarily limited to this particular example. The syntax indicating the use or nonuse of the TIMD method for chroma components may be transmitted/parsed at any level, such as slice header, tile, Picture Parameter Set (PPS), picture header, and the like.

As shown in Table 3, if sps_chroma_timd_flag is true, i.e., the TIMD method for chroma components is used when encoding/decoding the current chroma component, then chroma_timd_flag, a syntax indicating whether the current chroma block uses the TIMD method is transmitted/parsed. If chroma_timd_flag is false, i.e., the current chroma block does not use the TIMD method, the mode of the current chroma block is determined by using the intra-mode transfer/parsing method of the existing chroma components. On the other hand, if chroma_timd_flag is true, i.e., the current chroma block uses the TIMD method, then cclm_flag, a syntax indicating use or nonuse of the Cross-Component Linear Model (CCLM) is transmitted/parsed.

If the current chroma block is using CCLM, the mode for the current chroma block is derived by applying the TIMD method to the three CCLM modes of LT_CCLM mode using the top and left neighboring samples, T_CCLM mode using the top neighboring samples, and L_CCLM mode using the left neighboring samples. If the current chroma block does not use CCLM, the mode for the current chroma block is derived by applying the TIMD method to the candidate modes in the candidate mode list generated based on the directional mode.

As shown in Table 3, if sps_chroma_timd_flag is false, the intra-mode transfer/parsing method of the existing chroma component is used to determine the mode of the current chroma block.

In the method according to Table 3, if the current chroma block uses the TIMD method, the cclm_flag indicating use or nonuse of CCLM is used to divide the candidate modes subjected to the TIMD method into two candidate mode groups of a regular directional mode group and a CCLM mode group. The TIMD method is then applied to a selected one candidate mode group of the two candidate mode groups. In sum, the TIMD method for the existing chroma components when used by the current chroma block applies to all chroma candidate modes in the generated candidate mode list to determine the optimal mode. However, the method according to the present example divides the candidate modes in the generated candidate mode list into two candidate mode groups, selects one candidate mode group based on the use or nonuse of CCLM, and applies the TIMD method to the candidate modes in the selected candidate mode group. Thus, the method according to the present example can reduce the complexity of the video decoding device by applying the TIMD method to a smaller number of candidate modes compared to the conventional method.

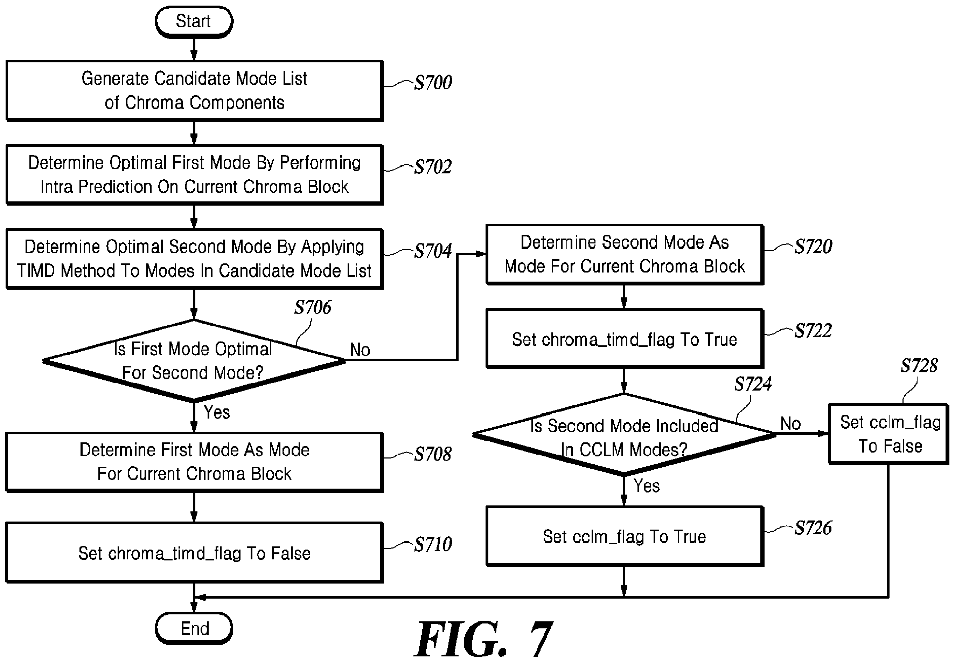

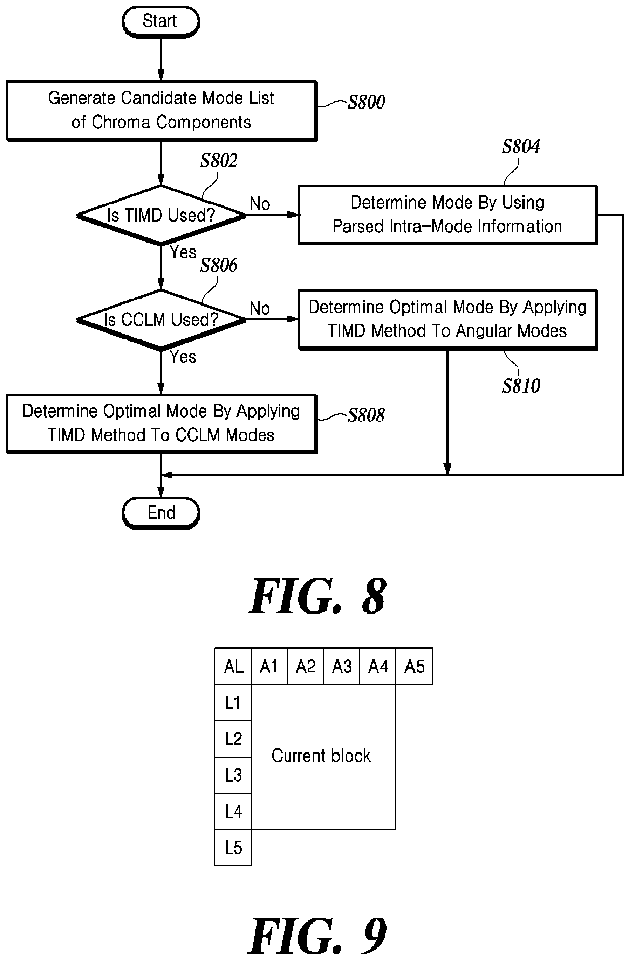

Hereinafter, with reference to FIGS. 7 and 8, a TIMD method for chroma components is described.

FIG. 7 is a flowchart of a TIMD method performed by the video encoding device for chroma components, according to at least one embodiment of the present disclosure.

The video encoding device generates a list of candidate modes of the chroma components for the current chroma block (S700). The video encoding device may generate the list of candidate modes of the chroma components by Example 2, which is described below.

The video encoding device performs intra prediction on the current chroma block to determine an optimal first mode (S702). The video encoding device may determine the first mode in terms of optimizing rate distortion.

The video encoding device determines an optimal second mode by applying the TIMD method to the modes in the candidate mode list (S704). The video encoding device may determine the second mode in terms of optimizing rate distortion.

The video encoding device may verify whether the first mode is optimal for the second mode (S706).

When the first mode is optimal (Yes in S706), the video encoding device determines the first mode to be the mode for the current chroma block (S708) and sets the chroma_timd_flag described above to false (S710) to indicate whether the TIMD method is used for the current chroma block. Thereafter, the video encoding device encodes the intra-mode information associated with the first mode and the chroma_timd_flag.

When the second mode is optimal (No in S706), the video encoding device determines the second mode to be the mode for the current chroma block (S720) and sets the aforementioned chroma_timd_flag to true (S722) to indicate whether the TIMD method is to be used for the current chroma block.

The video encoding device checks whether the second mode is included in the CCLM modes (S724). Here, the CCLM modes include the LT_CCLM mode utilizing the top and left neighboring samples, the T_CCLM mode utilizing the top neighboring samples, and the L_CCLM mode utilizing the left neighboring samples.

When the second mode is included in the CCLM modes (Yes in S724), the video encoding device sets the cclm_flag described above to true (S726) to indicate the use of CCLM for the current chroma block.

When the second mode is included in the directional modes, not in the CCLM modes (No in S724), the video encoding device sets the cclm_flag described above to false (S728), indicating the use of directional modes for the current chroma block.

Thereafter, the video encoding device encodes the chroma_timd_flag and the cclm_flag.

FIG. 8 is a flowchart of a TIMD method performed by the video decoding device for chroma components, according to at least one embodiment of the present disclosure.

The video decoding device generates a list of candidate modes of the chroma components for the current chroma block (S800). The video decoding device may generate the list of candidate modes of the chroma components by Example 2 which is described below.

The video decoding device determines whether the TIMD method is used for the current chroma block (S802). For example, the video decoding device may parse from the bitstream the chroma_timd_flag described above to determine whether the TIMD method is used for the current chroma block.

When the current chroma block does not utilize the TIMD method (No in S802), the video decoding device may take the same conventional method to parse from the bitstream the intra-mode information of the chroma component and may use the parsed intra-mode information to determine a mode for the current chroma block (S804). For example, the intra-mode information may be an index indicating the intra-mode of the current chroma block.

When the current chroma block utilizes the TIMD method (Yes in S802), the video decoding device determines whether CCLM is used (S806). For example, the video decoding device may parse from the bitstream the cclm_flag described above to determine whether CCLM is used for the current chroma block.

When CCLM is used (Yes in S806), the video decoding device may apply the IMD method to the CCLM modes in the candidate mode list to determine the optimal mode for the current chroma block (S808). Here, the CCLM modes include the LT_CCLM mode utilizing the top and left neighboring samples, the T_CCLM mode utilizing the top neighboring samples, and the L_CCLM mode utilizing the left neighboring samples. On the other hand, when CCLM is not used (No in S806), the TIMD method is applied to the directional modes in the candidate mode list to determine the optimal mode for the current chroma block (S810).

According to Steps S804, S808, and S810, the video decoding device may determine the intra-mode of the current chroma block.

In conclusion, Example 1 provides an approach to reduce the complexity of a video decoding device by using the cclm_flag to limit the number of candidate modes subjected to the TIMD method for chroma components in the video decoding device.

<Example 2> Composing a Candidate List by TIMD Method for Chroma Components

A candidate mode list for the intra-mode of an existing chroma-component block is composed by using the direct mode (DM), the default mode (planar, DC, vertical, horizontal), and the CCLM mode. In this case, the direct mode is the intra mode of the luma block co-located with the current chroma block.

When using the method of composing the candidate mode list for the intra mode of the existing chroma-component block, the candidate modes in the candidate mode list cannot be efficiently organized because it simply uses the default mode without considering the correlation with the surrounding neighboring modes. Furthermore, the TIMD method for chroma components also uses such a composed candidate mode list to derive the optimal mode, which may limit the coding efficiency. Therefore, Example 2 provides a method of efficiently composing a list of candidate modes of chroma components for encoding the existing chroma components in addition to TIMD for chroma components.

<Example 2-1> Composing a Chroma Candidate Mode List by Using the Method of Composing an MPM List of Luma Component

This example provides a method for composing a chroma candidate mode list by using the same method as the luma-component MPM list composition method. The video decoding device, considering the characteristics of the chroma-component block, first adds the direct mode and the CCLM mode to the chroma candidate mode list, and then applies the luma-component MPM list composition method to the directional mode to compose the chroma candidate mode list.

FIG. 9 is a diagram illustrating a current chroma block and its neighboring blocks.

In the illustration of FIG. 9, the top blocks (AL, A1, A2, A3, A4, A5) and the left blocks (L1, L2, L3, L4, L5) of the current block represent the smallest unit of blocks containing intra-mode information. Similar to how the luma-component MPM list is composed, the video decoding device uses the intra-mode information of the A4 block on the top right and the intra-mode information of the L4 block on the bottom left to compose the chroma candidate mode list. When composing the chroma candidate mode list, the video decoding device may perform a redundancy check as with the luma-component MPM list composition method, and add non-redundant modes to the chroma candidate mode list. At this time, the size of the chroma candidate mode list, i.e., the number of candidates included in the chroma candidate mode list, may be arbitrarily determined. If the size of the chroma candidate mode list is large, the coding efficiency and the complexity may be increased in tandem, and conversely, if the size of the chroma candidate mode list is small, the complexity and the coding efficiency may be reduced in tandem. Accordingly, the appropriate size of the chroma candidate mode list may be arbitrarily determined by considering coding efficiency and complexity.

<Example 2-2> Composing a Chroma Candidate Mode List Based on Neighboring Blocks

This example provides a method of composing a chroma candidate mode list by using intra-mode information of neighboring blocks around the current chroma block. The video decoding device first adds the direct mode and the CCLM mode to the chroma candidate mode list in consideration of the characteristics of the chroma-component block and then composes the chroma candidate mode list by using the intra-mode information of the neighboring blocks around the current chroma block.

As shown in the example of FIG. 9, the video decoding device searches the neighboring blocks of the current block in a preset order and composes a chroma candidate mode list by using the intra-modes of the searched blocks. At this time, the search order may be determined to be an arbitrary order, and the size of the chroma candidate mode list may also be arbitrarily determined. When adding the intra modes of the block to the chroma candidate mode list according to the search order, a redundancy check is performed, and the non-redundant modes are added to the chroma candidate mode list. In this example as well, the size of the suitable chroma candidate mode list may be arbitrarily determined by considering coding efficiency and complexity.

When composing the chroma candidate mode list by using the methods according to Example 2-1 and Example 2-2, if the chroma candidate mode list is not fulfilled, the chroma candidate mode list may be composed by using preset default modes. In this case, the default modes may be arbitrarily determined.

The two methods provided in Example 2, i.e., the method of composing a chroma candidate mode list by using the luma-component MPM list composition method, and the method of composing a chroma candidate mode list based on the neighboring blocks, both add the direct mode and the CCLM mode to the front of the chroma candidate mode list when composing the candidate mode list for chroma components. Thereafter, the remainder of the chroma candidate mode list is then composed by selecting any of the method of Example 2-1 and the method of Example 2-1.

The method of composing the chroma-component candidate mode list according to Example 2 may be applied by selecting any of the following three methods. The three methods include i) a template-based intra-mode derivation method for chroma components, ii) intra encoding of the existing chroma components, and iii) the template-based intra-mode derivation method for chroma components plus the intra-encoding of the existing chroma component. Here, the third method may be applied, for example, when utilizing chroma_timd_flag.

<Example 3> Combining Example 1 and Example 2

Example 1 provides the method of reducing the complexity of a video decoding device for the TIMD method for chroma components. The complexity of the video decoding device is reduced, but at the same time, the coding efficiency may be reduced. Example 2 provides in addition to the TIMD method for chroma components the chroma-component candidate mode list composition method for increasing the coding efficiency of encoding the existing chroma components.

Since Example 1 and Example 2 may be complementary to each other, Example 3 provides a method of combining the method of Example 1 and the method of Example 2. Example 3 uses the method of Example 2 in addition to the TIMD method for chroma components to compose a chroma candidate mode list for encoding the existing chroma components. Then, Embodiment 3 uses the composed chroma candidate mode list as a basis for the method of Embodiment 1 used to reduce the complexity of the video decoding device according to the TIMD method for chroma components. Thus, the coding efficiency may be increased while the complexity of the video decoding device is reduced.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in the present disclosure are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media, such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

(Reference Numerals)

> 122: intra predictor
> 155: entropy encoder
> 510: entropy decoder
> 542: intra predictor

CROSS-REFERENCE TO RELATED APPLICATIONS

This application claims priority to and the benefit of Korean Patent Application No. 10-2022-0000957, filed on January 4, 2022, and Korean Patent Application No. 10-2022-0173907, filed on December 13, 2022, the entire contents of each of which are incorporated herein by reference.

**Claims**

1. A method performed by a video decoding device for deriving an intra mode of a current chroma block, the method comprising:

   generating a candidate mode list that is a list of candidate modes of chroma components for the current chroma block;
   determining use or nonuse of a template-based intra mode derivation method for the current chroma block;
   in response to the use of the template-based intra mode derivation method, determining use or nonuse of a cross-component linear model (CCLM);
   in response to the use of the CCLM, determining an intra mode of the current chroma block by applying the template-based intra mode derivation method to CCLM modes in the candidate mode list; and
   in response to the nonuse of the CCLM, determining an intra mode of the current chroma block by applying the template-based intra mode derivation method to directional modes in the candidate mode list.

2. The method of claim 1, further comprising:
   in response to the nonuse of the template-based intra mode derivation method, decoding, from a bitstream, an intra-mode information of the chroma components, and using the intra-mode information to determine the intra mode of the current chroma block.

3. The method of claim 1, wherein the template-based intra mode derivation method includes:

   applying a prediction method of each of the candidate modes to reference samples of a template to generate a prediction template; and
   calculating a sum of absolute transformed differences between samples of the prediction template and samples of a reconstructed template to determine a candidate mode with a smallest sum of absolute transformed differences as the intra mode of the current chroma block,

wherein the candidate modes are either the CCLM modes or the directional modes.

4. The method of claim 1, wherein determining use or nonuse of the template-based intra mode derivation method includes:
decoding and checking a flag from a bitstream to indicate a use or nonuse of the template-based intra mode derivation method.

5. The method of claim 1, wherein determining use or nonuse of the CCLM includes:
decoding and checking a flag from a bitstream to indicate a use or a nonuse of the CCLM.

6. The method of claim 1, wherein generating the candidate mode list includes:

adding a direct mode (DM) and the CCLM modes to the list of candidate modes of chroma components; and
composing the list of candidate modes of the chroma components for the current chroma block by using intra-mode information of a top right block and intra-mode information of a bottom left block.

7. The method of claim 6, wherein generating the candidate mode list includes:
performing a redundancy check, and adding non-redundant modes to the list of candidate modes of the chroma components.

8. The method of claim 6, wherein generating the candidate mode list includes:
in response to a determination that the list of candidate modes of the chroma components is not fulfilled, composing the list of candidate modes of the chroma components by using preset default modes.

9. The method of claim 1, wherein generating the candidate mode list includes:

adding a direct mode (DM) and the CCLM modes to the list of candidate modes of chroma components;
searching for neighboring blocks of the current chroma block in a predetermined order; and
composing the list of candidate modes of the chroma components by utilizing intra-mode information of searched neighboring blocks.

10. A method performed by a video encoding device for deriving an intra mode of a current chroma block, the method comprising:

generating a candidate mode list that is a list of candidate modes of chroma components for the current chroma block;
determining a first mode that is optimal by performing an intra prediction on the current chroma block;
determining a second mode that is optimal by performing a template-based intra mode derivation method on the candidate modes in the candidate mode list; and
verifying whether the first mode is optimal with respect to the second mode,
wherein in response to a verification that the second mode is optimal, the method further includes

determining the second mode to be an intra mode of the current chroma block,
setting a flag indicating whether to use the template-based intra mode derivation method to true, and
setting a flag indicating whether to use a cross-component linear model (CCLM) depending on whether the second mode is included in CCLM modes.

11. The method of claim 10, further comprising:
encoding the flag indicating whether to use the template-based intra mode derivation method, and the flag indicating whether to use the CCLM.

12. The method of claim 10, further comprising:
in response to a determination that the first mode is optimal, determining the first mode to be the intra mode of the current chroma block, and setting the flag indicating whether to use the template-based intra mode derivation method to false.

13. The method of claim 12, further comprising:

encoding an intra-mode information associated with the first mode; and
encoding the flag indicating whether to use the template-based intra mode derivation method.

14. A computer-readable recording medium storing a bitstream generated by a video encoding method, the video encoding method comprising:

generating a candidate mode list that is a list of candidate modes of chroma components for a current chroma block;
determining a first mode that is optimal by performing an intra prediction on the current chroma block;
determining a second mode that is optimal by performing a template-based intra mode derivation method on the candidate modes in the candidate mode list; and
verifying whether the first mode is optimal with respect to the second mode,
wherein in response to a verification that the second mode is optimal, the video encoding method further includes

determining the second mode to be an intra mode of the current chroma block, and setting a flag indicating whether to use the template-based intra mode derivation method to true, and
setting a flag indicating whether to use a cross-component linear model (CCLM) depending on whether the second mode is included in CCLM modes.

*FIG. 1*

FIG. 2

FIG. 3A

**FIG. 3B**

**FIG. 4**

**FIG. 5**

FIG. 6

EP 4 436 169 A1

Start

Generate Candidate Mode List
of Chroma Components — S700

Determine Optimal First Mode By Performing
Intra Prediction On Current Chroma Block — S702

Determine Optimal Second Mode By Applying
TIMD Method To Modes In Candidate Mode List — S704

S706

Is First Mode Optimal
For Second Mode? — No

Yes

Determine First Mode As Mode
For Current Chroma Block — S708

Set chroma_timd_flag To False — S710

Determine Second Mode As
Mode For Current Chroma Block — S720

Set chroma_timd_flag To True — S722

S724

Is Second Mode Included
In CCLM Modes? — No

S728

Set cclm_flag
To False

Yes

Set cclm_flag To True — S726

End

*FIG. 7*

```
                    ┌─────────┐
                    │  Start  │
                    └────┬────┘
                         │
         ┌───────────────▼───────────────┐
         │  Generate Candidate Mode List │──── S800
         │     of Chroma Components       │
         └───────────────┬───────────────┘
                         │        S802
                    ┌────▼─────┐              ┌──────────────────────────┐
                    │ Is TIMD  │     No       │  Determine Mode By Using │  S804
                    │  Used?   ├─────────────►│ Parsed Intra-Mode Info   │
                    └────┬─────┘              └──────────────────────────┘
                     Yes │  S806
                    ┌────▼─────┐              ┌───────────────────────────┐
                    │ Is CCLM  │     No       │ Determine Optimal Mode By │
                    │  Used?   ├─────────────►│ Applying TIMD Method To   │
                    └────┬─────┘              │      Angular Modes        │
                     Yes │                    └───────────────────────────┘
         ┌───────────────▼───────────────┐              S810
         │  Determine Optimal Mode By    │──── S808
         │ Applying TIMD Method To CCLM  │
         │           Modes               │
         └───────────────┬───────────────┘
                         │
                    ┌────▼────┐
                    │   End   │
                    └─────────┘
```

**FIG. 8**

| AL | A1 | A2 | A3 | A4 | A5 |
|----|----|----|----|----|----|
| L1 | | | | | |
| L2 | | | Current block | | |
| L3 | | | | | |
| L4 | | | | | |
| L5 | | | | | |

**FIG. 9**

<div align="center">

**INTERNATIONAL SEARCH REPORT**

</div>

| | International application No. |
|---|---|
| | **PCT/KR2022/020377** |

**A. CLASSIFICATION OF SUBJECT MATTER**

**H04N 19/11**(2014.01)i; **H04N 19/513**(2014.01)i; **H04N 19/186**(2014.01)i; **H04N 19/105**(2014.01)i; **H04N 19/176**(2014.01)i; **H04N 19/70**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/105(2014.01); H04N 19/117(2014.01); H04N 19/132(2014.01); H04N 19/159(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 크로마(chroma), 후보(candidate), 리스트(list), 템플릿 기반 인트라 모드 유도 (template-based intra mode derivation), CCLM(cross-component linear model), cclm_mode_flag, cclm_mode_idx, sps_chroma_ timd_flag

**C. DOCUMENTS CONSIDERED TO BE RELEVANT**

| Category* | Citation of document, with indication, where appropriate, of the relevant passages | Relevant to claim No. |
|---|---|---|
| A | WO 2020-116848 A1 (LG ELECTRONICS INC.) 11 June 2020 (2020-06-11)<br>See claims 1 and 7. | 1-14 |
| A | KR 10-2019-0033559 A (QUALCOMM INCORPORATED) 29 March 2019 (2019-03-29)<br>See claims 1-20. | 1-14 |
| A | KR 10-2021-0118951 A (LG ELECTRONICS INC.) 01 October 2021 (2021-10-01)<br>See claims 1-15. | 1-14 |
| A | KR 10-2021-0125086 A (HUAWEI TECHNOLOGIES CO., LTD.) 15 October 2021 (2021-10-15)<br>See claims 1-30. | 1-14 |
| A | KR 10-2021-0100739 A (LG ELECTRONICS INC.) 17 August 2021 (2021-08-17)<br>See claims 1-15. | 1-14 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2023** | **30 March 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020377**

| Patent document cited in search report | | | Publication date (day/month/year) | Patent family member(s) | | | Publication date (day/month/year) |
|---|---|---|---|---|---|---|---|
| WO | 2020-116848 | A1 | 11 June 2020 | US | 2022-0021902 | A1 | 20 January 2022 |
| KR | 10-2019-0033559 | A | 29 March 2019 | EP | 3497930 | A1 | 19 June 2019 |
| | | | | EP | 3497933 | A1 | 19 June 2019 |
| | | | | JP | 2019-525659 | A | 05 September 2019 |
| | | | | JP | 2019-528025 | A | 03 October 2019 |
| | | | | KR | 10-2495160 | B1 | 01 February 2023 |
| | | | | US | 10326986 | B2 | 18 June 2019 |
| | | | | US | 10368107 | B2 | 30 July 2019 |
| | | | | US | 11310536 | B2 | 19 April 2022 |
| | | | | US | 2018-0048889 | A1 | 15 February 2018 |
| | | | | US | 2018-0063553 | A1 | 01 March 2018 |
| | | | | US | 2019-0313130 | A1 | 10 October 2019 |
| | | | | WO | 2018-035127 | A1 | 22 February 2018 |
| | | | | WO | 2018-035130 | A1 | 22 February 2018 |
| KR | 10-2021-0118951 | A | 01 October 2021 | CN | 113678456 | A | 19 November 2021 |
| | | | | EP | 3941065 | A1 | 19 January 2022 |
| | | | | US | 11431985 | B2 | 30 August 2022 |
| | | | | US | 2022-0007028 | A1 | 06 January 2022 |
| | | | | US | 2022-0368919 | A1 | 17 November 2022 |
| | | | | WO | 2020-189960 | A1 | 24 September 2020 |
| KR | 10-2021-0125086 | A | 15 October 2021 | CN | 113545063 | A | 22 October 2021 |
| | | | | EP | 3928517 | A1 | 29 December 2021 |
| | | | | JP | 2022-521757 | A | 12 April 2022 |
| | | | | US | 2021-0385440 | A1 | 09 December 2021 |
| | | | | WO | 2020-169113 | A1 | 27 August 2020 |
| KR | 10-2021-0100739 | A | 17 August 2021 | CN | 113491115 | A | 08 October 2021 |
| | | | | US | 2021-0368165 | A1 | 25 November 2021 |
| | | | | WO | 2020-180119 | A1 | 10 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220000957

- KR 1020220173907